# EUROPEAN PATENT APPLICATION

(11) **EP 0 766 995 A1**
(43) Date of publication of application: **09.04.1997**
(21) Application number: 96202643.1
(22) Date of filing: 21.09.1996
(51) Int. Cl.: B01D 71/02, C04B 38/00

(54) **Method for making a ceramic membrane**

(30) Priority: 03.10.1995 BE 9500818
(71) Applicant: VLAAMSE INSTELLING VOOR TECHNOLOGISCH ONDERZOEK, afgekort V.I.T.O., onderneming van openbaar nut onder de vorm van een n.v., 2400 Mol (BE)
(72) Inventor: Adriansens, Walter, 2400 Mol (BE); Luyten, Jan, 3054 Vaalbeek (BE); Blume, Ingo, 7555 ND Hengelo (NL); Leysen, Roger, 2400 Mol (BE)
(74) Representative: Debrabandere, René

(57) **Abstract**

Method for making a ceramic membrane, according to which a suspension is formed of an organic solvent, an organic binder and a ceramic powder including aluminium oxide and/or aluminium nitride and/or aluminium oxynitride, this suspension is put in the required shape, the solvent is subsequently removed from the suspension and the binding agent is thermally removed, and the obtained product is finally subjected to a thermal treatment which includes a sintering, characterized in that apart from the above-mentioned ceramic powder also aluminium powder is added to the suspension.

## Description

The present invention concerns a method for making a ceramic membrane, according to which a suspension is formed of an organic solvent, an organic binder and a ceramic powder including aluminium oxide and/or aluminium nitride and/or aluminium oxynitride, this suspension is put in the required shape, the solvent is subsequently removed from the suspension and the binding agent is thermally removed, and the obtained product is finally subjected to a thermal treatment which includes a sintering.

Such a method is described in EP-A-0.650.759 in the applicant's name.

The obtained membranes with ceramic powder particles are used among others as a filter medium, in particular for micro and ultrafiltration.

Although the membranes obtained according to the above-mentioned known method have good qualities, it is desirable that for some applications the mechanical strength is better.

Therefore, the invention aims at a method for making a ceramic membrane which makes it possible to obtain a membrane with a greater mechanical strength.

This aim is reached according to the invention in that, in addition to the above-mentioned ceramic powder, also aluminium powder is added to the suspension.

Surprisingly, it was found that thanks to this aluminium powder, the strength of the membrane increased significantly. During the oxidation of the aluminium oxide of the green product, aluminium grains are obtained with dimensions in the order of nanometres with a grain boundary free of glass phase. This provides a higher mechanical strength to the final material after the sintering or presintering treatment.

The manufacturing of ceramic tools or machine parts of reaction-bound aluminium oxide is known as such from WO-A-89/0755. The inorganic particles and the aluminium powder are mixed, but without using any organic binding agent, compressed in the required shape, dry and under high pressure, and sintered.

Preferably, an amount of aluminium powder is added to the suspension which is more than 10 vol.% and is situated for example between 10 and 50 vol.%, whereby the vol.% are calculated on the amount of inorganic material in the suspension.

The amount of aluminium oxide, aluminium nitride and/or aluminium oxynitride in the suspension is preferably higher than 40 vol.%, calculated on the total amount of inorganic material in the suspension.

Apart from the above-mentioned aluminium compounds, also other inorganic chemicals can be added, namely one or more chemicals from the group composed of ZrO₂, SiC, B₄C, TiC, Si₃N₄, WC, TaC, ZrB₂, TiB₂.

Apart from aluminium metal powder, one or more alloying elements Mg, Si, Zn, Pb, Na, Li or Se can be added.

However, the suspension can also be shaped by means of a spinning technique whereby the suspension is put in a coagulant by means of a spinning head, which may consist of a non-solvent, usually water, and which removes the solvent.

In order to better explain the characteristics of the invention, the following embodiments of a method for making a membrane according to the invention are described as an example only without being limitative in any way.

According to the invention, a suspension is formed of an organic solvent, an organic binder, a ceramic powder including aluminium oxide and/or aluminium nitride and/or aluminium oxynitride, and aluminium powder, after which this suspension is put in the required shape, the solvent is subsequently removed from the suspension and the binding agent is thermally removed, and the obtained product is finally subjected to a thermal treatment which includes a sintering.

The amount of aluminum powder added to the suspension is more than 10 vol.% and is situated for example between 10 and 50 vol.%, whereby the vol.% are calculated on the amount of inorganic material in the suspension.

The amount of aluminium oxide, aluminium nitride and/or aluminium oxynitride in the suspension is practically more than 40 vol.%, calculated on the total amount of inorganic material in the suspension.

The weight ratio ceramic material/aluminium powder is preferably about 60/40.

The grain size of the ceramic powder is for example between 5 and 20 micrometer, and that of the aluminium powder is for example some 15 micrometer.

Apart from the above-mentioned aluminium compounds, also other inorganic chemicals can be added, namely one or more chemicals from the group composed of ZrO₂, SiC, B₄C, TiC, Si₃N₄, WC, TaC, ZrB₂, TiB₂.

Apart from aluminium metal powder, one or more alloying elements Mg, Si, Zn, Pb, Na, Li or Se can be added.

The weight ratio between the total amount of inorganic material in the suspension and the amount of binder is between 1 and 99.

Preferably, the weight ratio between the inorganic material and the binder is situated between 4 and 20, for example between 6 and 10.

Suitable organic solvents are N-methyl-2-pyrrolidone, dimethyl formamide, dimethyl sulfoxide and methyl-ethyl ketone or mixtures thereof.

The organic binder is a polymer which is part of the group of polysulphone, polyvinylidene fluoride and polyacrylonitrile.

The suspension is put in the required shape by casting a film on a preferably porous substrate which can be either flat or have the shape of a tube. This substrate is preferably formed of a ceramic material, for example of one or several chemicals from the group of oxides, carbides and nitrides.

Water can be used as a non-solvent for the extraction of the solvent or coagulant.

After the extraction of the solvent, a green product is obtained which is free of macroholes.

In another embodiment, a hollow fibre is spun from the suspension by means of a spinning head, which is put immediately thereafter in a bath with the non-solvent or the coagulant.

In some cases, the water which is used to remove the solvent may attack the aluminum in the green product. In these cases, the spun fibre is only maintained sufficiently long in the water so as to obtain the required strength of the fibre by means of coagulation, usually a few minutes, after which the solvent is further removed by putting the fibre in a bath of alcohol, for example isopropanol.

By spreading out the suspension on a substrate or a flat plate and by subsequently immersing it in a non-solvent, a flat strip of the green product is obtained.

In all the preceding embodiments, the formed green product is subjected to a thermal treatment after the shaping, which includes as a first step the removal of the binder.

This thermal treatment requires special attention and consists of a calcination, an oxidation and a sinter stage.

Said first stage is the heating up in an oven in an air atmosphere with a heating-up rate of for example some 30°C/h up to a temperature of some 400°C, at which the calcination takes place. With a slower heating-up rate of for example some 10°C/h, the heating up goes further to about 500 to 550°C. Hereby, the oxidation continues.

In a second stage, the green product is heated further to some 1,100°C and maintained at this temperature for a certain period of time, for example for 1 hour, and then cooled down to room temperature. The oxidation and the reaction between the ceramic material and the aluminium metal powder have certainly come to an end by then.

Next, the temperature is raised in an air atmosphere with a rate of rise of for example 120°C/h to the sinter temperature of for example 1,300°C and maintained at this temperature for a certain period of time, for example one or two hours, after which it is cooled down to room temperature.

In this way, a ceramic membrane is obtained in the shape of a flat plate, a hollow fibre or a strip.

The outside diameter of the fibre is minimally 100 micrometer and preferably less than 2 mm. The thickness of the wall of the fibre is between 30 and 1,000 micrometer. The porosity is between 30 and 75%.

The strip has a porosity of for example 62% and an average pore size of for example 0.3 micrometer.

The invention will be further explained by means of the following examples:

### Example 1.

In a ball mill filled with zirconium oxide balls, a mixture consisting of 60 % by weight aluminium oxide (type HCST Stark) with a grain size situated between 5 and 20 micrometer and 40% by weight aluminium (type Boudier 01GA) with a grain size of about 15 micrometer was broken in acetone for 8 hours.

This broken mixture was dried in an air atmosphere at room temperature.

In a mixer, 35 gram of polysulphone (Udel type p 1800 NT11 of Amoco Chemicals) was mixed with 214.8 gram of N-methyl-2-pyrrolidone (type 14.9322.91 of Janssen Chimica).

In the same mixer was added 314.7 gram of the above-mentioned broken mixture of aluminium and aluminium oxide to said solution.

Finally, this suspension was diluted with 96 gram of N-methyl-pyrrolidone.

The thus obtained suspension was spun into a hollow fibre at a temperature of 40°C at a spinning rate of 10 meter per minute by means of a spinning head with an opening of about 2 mm, and then immersed in water at 75°C.

The distance between the spinning head and the water bath was 15 cm and the vapour temperature above the bath was 35°C.

The liquid in the cavity of the hollow fibre was composed of 49.5% reverse osmosis water and 50.5% of N-methyl-2-pyrrolidone.

After a few minutes, sufficiently long to give the fibre the required mechanical strength by means of coagulation, said fibre was put in isopropanol.

After the extraction of the solvent N-methyl-2-pyrrolidone by means of water and isopropanol, a green product was obtained which was free of any faults, in particular of macroholes.

This green product was then heated to 400°C in an air atmosphere, with a rate of rise of 30°C/h. The largest part of the polysulphone was hereby thermally removed.

Afterwards, the heating-up rate was lowered to 10°C per hour, such to a temperature of 500°C. This is the most critical area of the oxidation.

Next, the product was heated further to 1,100°C at a heating-up rate of 600°C/h. This temperature was maintained constant for 1 hour.

Finally, the product was put in a sintering furnace and heated further at an air atmosphere with a rate of rise of 120°C/h to 1,350°C. The latter temperature was maintained for 2 hours, after which it was cooled down to room temperature with a rate of descent of 600°C/h.

The obtained end-product had a porosity of 60% and an average pore size of 0.4 micrometer.

This end-product on the basis of reaction-bound aluminium oxide was mechanically twice as strong as a similar end product made of exclusively aluminium oxide.

### Example 2.

In a ball mill filled with zirconium oxide balls, a mixture consisting of 60 % by weight aluminium oxide (type HCST Stark) with a grain size situated between 5 and 20 micrometer and 40% by weight aluminium (type Boudier 01GA) with a grain size of about 15 micrometer was broken in acetone for 8 hours.

This broken mixture was dried in an air atmosphere at room temperature.

In a mixer, 35 gram of polysulphone (Udel type p 1800 NT11 of Amoco Chemicals) was mixed with 214.8 gram of N-methyl-2-pyrrolidone (type 14.9322.91 of Janssen Chimica).

In the same mixer was added 314.7 gram of the above-mentioned broken mixture of aluminium and aluminium oxide to said solution.

A strip of the suspension was drawn on a glass plate by means of a casting device.

This strip was drawn from the casting device at a speed of 3 cm per second. The thickness of the opening of the casting knife was 200 micrometer.

The thus obtained green product was subjected to the same thermal treatment as in example A.

The obtained end product had a porosity of 60% and an average pore size of 0.4 micrometer.

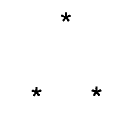

The membrane obtained according to the method is particularly suitable for micro and ultrafiltration.

As, apart from the ceramic material, also aluminium powder is added, reaction-bound aluminium oxide is obtained during the thermal treatment, so that membranes with a particular mechanical strength are obtained.

The present invention is by no means limited to the above-described embodiments; on the contrary, such methods for making a membrane can be made in all sorts of variants while still remaining within the scope of the invention.

## Claims

1. Method for making a ceramic membrane, according to which a suspension is formed of an organic solvent, an organic binder and a ceramic powder including aluminium oxide and/or aluminium nitride and/or aluminium oxynitride, this suspension is put in the required shape, the solvent is subsequently removed from the suspension and the binding agent is thermally removed, and the obtained product is finally subjected to a thermal treatment which includes a sintering, characterized in that apart from the above-mentioned ceramic powder also aluminium powder is added to the suspension.

2. Method according to claim 1, characterized in that an amount of aluminium powder is added to the suspension which is more than 10 vol.%, calculated on the amount of inorganic material in the suspension.

3. Method according to claim 2, characterized in that an amount of aluminium powder is added to the suspension which is situated between 10 and 50 vol.%, whereby the vol.% are calculated on the amount of inorganic material in the suspension.

4. Method according to any of the preceding claims, characterized in that an amount of aluminium oxide, aluminium nitride and/or aluminium oxynitride is put in the suspension which amounts to more than 40 vol.%, calculated on the total amount of inorganic material in the suspension.

5. Method according to any of the preceding claims, characterized in that apart from the above-mentioned aluminium compounds, also other inorganic chemicals are added, namely one or more chemicals from the group composed of ZrO₂, SiC, B₄C, TiC, Si₃N₄, WC, TaC, ZrB₂, TiB₂.

6. Method according to any of the preceding claims, characterized in that apart from aluminium metal powder, one or more alloying elements Mg, Si, Zn, Pb, Na, Li or Se are added.

7. Method according to any of the preceding claims, characterized in that the weight ratio ceramic material/aluminium powder is about 60/40.

8. Method according to any of the preceding claims, characterized in that the weight ratio between the total amount of inorganic material in the suspension and the amount of binder is between 1 and 99.

9. Method according to any of the preceding claims, characterized in that the suspension is shaped by means of casting on a substrate.

10. Method according to any of claims 1 to 9, characterized in that the suspension is shaped by means of a spinning technique whereby the suspension is put in a coagulant by means of a spinning head, which removes the solvent.

11. Method according to any of the preceding claims, characterized in that the thermal treatment is carried out in at least three stages, namely the heating-up to a first temperature at which the binder is removed, a second heating to a higher temperature at which the reaction between the ceramic material and the aluminium powder takes place, and a third heating up to yet a higher temperature at which the sintering takes place.
